# EUROPÄISCHE PATENTSCHRIFT

(11) **EP 3 563 462 B1**
(45) Veröffentlichungstag und Bekanntmachung des Hinweises auf die Patenterteilung: **15.05.2024**
(21) Anmeldenummer: 18700012.0
(22) Anmeldetag: 02.01.2018
(51) Int. Cl.: H02J 3/14, H02J 3/38

(54) **VERFAHREN ZUM STEUERN EINES ELEKTRISCHEN VERTEILNETZES**
METHOD FOR CONTROLLING AN ELECTRICAL DISTRIBUTION NETWORK
PROCÉDÉ DE COMMANDE D'UN RÉSEAU DE DISTRIBUTION ÉLECTRIQUE

(30) Priorität: 30.12.2016 DE 102016125947
(43) Veröffentlichungstag der Anmeldung: 06.11.2019
(73) Patentinhaber: Wobben Properties GmbH, 26607 Aurich (DE)
(72) Erfinder: BROMBACH, Johannes, 13437 Berlin (DE); BLAAK, Isabel, 53347 Alfter (DE); SCHUBERT, Katharina, 40668 Meerbusch (DE)
(74) Vertreter: Eisenführ Speiser
(86) Internationale Anmeldenummer: PCT/EP2018/050048
(87) Internationale Veröffentlichungsnummer: WO 2018/122405

(56) Entgegenhaltungen:
- EP-A1- 2 806 520
- WO-A1-2011/027195
- WO-A2-2007/065135
- US-A1- 2013 035 800
- US-A1- 2014 188 689
- STEVE VÖLLER: "Optimierte Betriebsführung von Windenergieanlagen durch Energiespeicher (dissertation)", INTERNET CITATION, 1 January 2010 (2010-01-01), pages FP-xiv, 1, XP002778949, Retrieved from the Internet: URL:http://nbn-resolving.de/urn/resolver.p l?urn=urn%3Anbn%3Ade%3Ahbz%3A468-20100097 [retrieved on 2018-03-07]

## Beschreibung

Die vorliegende Erfindung betrifft ein Verfahren zum Steuern eines elektrischen Verteilnetzes, das mehrere Regelebenen aufweist.

Das Betreiben elektrischer Versorgungsnetze, wie bspw. des europäischen Verbundnetzes, ist allgemein bekannt.

Elektrische Versorgungsnetze sind dabei zumeist aus geopolitischen Gründen in mehrere Netzregelverbunde unterteilt, die jeweils für die Betriebsführung eines Abschnittes des elektrischen Verbundnetzes zuständig sind und diese zentralisiert steuern.

Die Abschnitte selbst sind mittels eines elektrischen Übertragungsnetzes miteinander verbunden, um elektrische Leistung untereinander auszutauschen bzw. elektrische Energie über große Distanzen zu transportieren. Die eigentliche Verteilung der elektrischen Energie innerhalb eines Abschnittes erfolgt über das elektrische Verteilnetz.

Die Steuerung des elektrischen Versorgungsnetzes erfolgt dabei mittels einer Reihe von Steuerungsmechanismen, die die Betriebssicherheit des entsprechenden Abschnittes gewährleisten sollen.

Ein Beispiel für einen solchen Steuerungsmechanismus ist eine Regelleistungsbereitstellung, die bspw. in Abhängigkeit einer Frequenzänderung eine Regelleistung bereitstellt, um ein Leistungsgleichgewicht zwischen erzeugter und verbrauchter Leistung einzustellen..

Bei den bisher bekannten Steuerungsmechanismen weichen diese Leistungen zumeist jedoch von einander ab, insbesondere da die tatsächliche Last nicht der prognostizierten Last entspricht. Dies wiederum führt dazu, dass unter einem hohen Aufwand weitere Steuerungsmechanismen eingesetzt werden müssen, um diese Abweichung zu kompensieren, da Abweichungen zwischen erzeugter und verbrauchter Leistung zu Störungen im elektrischen Verteilnetz führen können, beispielsweise zu einer Unterfrequenz im elektrischen Verteilnetz.

Die Kompensation einer Abweichung zwischen erzeugter und verbrauchter Leistung erfolgt innerhalb eines elektrischen Verteilnetzes zumeist durch Zu- oder Abschalten von Erzeugern und/oder Verbrauchern, um eine sogenannte Regelleistung bereitzustellen und/oder durch einen Austausch von Kuppelleistung mit anderen elektrischen Verteilnetzen, insbesondere über das elektrische Übertragungsnetz bzw. über sogenannte Kuppelleitungen.

Durch die zunehmende Durchdringung elektrischer Versorgungsnetze mit Erneuerbaren Energien wird die Betriebsführung der elektrischen Versorgungsnetze bzw. der elektrischen Verteilnetze zunehmend aufwendiger, insbesondere in Bezug auf die bisher bekannten Steuerungsmechanismen. Das liegt besonders daran, dass solche Energiequellen, besonders Windenergieanlagen und Photovoltaikanlagen, in ihrer Ausgangsleistung schwanken können. Besonderheiten durch meist dezentrale Verteilung und eine andere Art der Leistungseinspeisung als es von herkömmlichen Kraftwerken bekannt ist, kommen hinzu. So gewinnt bspw. eine schnellere und genauere Bereitstellung von Regelleistung immer mehr an Bedeutung, zugleich nimmt aber deren Steuerbarkeit auf Grund der Eigenschaft der regenerativen Erzeuger ab. Unter Berücksichtigung der notwendigen Betriebssicherheit und insbesondere unter Berücksichtigung der bisherigen Betriebsführung kann demzufolge die notwendige Betriebssicherheit eines elektrischen Versorgungsnetzes bzw. eines elektrischen Verteilnetzes zukünftig nur noch schwer bzw. nur noch mit hohem oder höherem Aufwand gewährleistet werden.

Das Deutsche Patent- und Markenamt hat in der Prioritätsanmeldung zu vorliegender Anmeldung folgenden Stand der Technik recherchiert: EP 3 214 718 A1; DE 10 2013 222 277 A1, DE 10 2014 112 979 A1, US 2010/0023174 A1, US 2014/0379159 A1 und US 2016/0248254 A1.

In dem Verfahren vor dem Europäischen Patentamt wurden folgende Dokumente ermittelt: WO 2011/027195 A1 (ABB TECHNOLOGY LTD [CH]; KULATHU GANESH [IN]; GUPTA ARINJAI [IN]; PAPA) 10. März 2011 (2011-03-10); US 2013/035800 A1 (KULATHU GANESH [IN] ET AL) 7. Februar 2013 (2013-02-07); US 2014/188689 A1 (KALSI KARAN [US] ET AL) 3. Juli 2014 (2014-07-03); EP 2 806 520 A1 (VITO NV [BE]) 26. November 2014 (2014-11-26); WO 2007/065135 A2 (ALTERNATIVE ENERGY SYSTEMS CON [US]; GIBSON GERALD L [US]; TROXELL WAD) 7. Juni 2007 (2007-06-07)

Aufgabe der vorliegenden Erfindung ist es somit, zumindest eines der oben genannten Probleme zu adressieren, insbesondere soll eine Lösung vorgeschlagen werden, die es ermöglicht, ein elektrisches Verteilnetz mit hoher Integration von Erneuerbaren Energien betriebsoptimiert zu betreiben. Als Erneuerbare Energien werden hier Erzeuger bezeichnet, die erneuerbare Energien verwenden. Zumindest aber soll eine Alternative zu bisher bekannten Lösungen vorgeschlagen werden.

Erfindungsgemäß wird somit ein Verfahren zum Steuern eines elektrischen Verteilnetzes gemäß Anspruch 1 vorgeschlagen. Demnach ist eine Netzleitstelle zum Steuern des elektrischen Versorgungsnetzes vorgesehen und das elektrische Verteilnetz in mehrere Regelgebiete unterteilt. Unter einem Regelgebiet ist dabei im Wesentlichen ein Zusammenschluss mehrerer Erzeuger und/oder Verbraucher zu verstehen, die in der Betriebsführung gegenüber Dritten zu einem Knoten bzw. einem Bilanzknoten zusammengefasst sind.

Zudem weist wenigstens ein Regelgebiet wenigstens einen Erzeuger, insbesondere einen Windpark, und einen zusätzlichen Verbraucher auf. Unter einem Windpark ist hierbei insbesondere eine räumliche Ansammlung von Windenergieanlagen zu verstehen, die organisatorisch und technisch miteinander verbunden sind.

Ferner ist wenigstens eine Regelgebietssteuerung vorgesehen, um den wenigstens einen Erzeuger bzw. den Windpark zu steuern. Die Regelgebietssteuerung ist somit wenigstens dazu eingerichtet, einen Erzeuger elektrischer Energie, bevorzugt einen Windpark, anzusteuern, beispielsweise durch die Übertragung von Sollwerten, insbesondere Wirk- und/oder Blindleistungssollwerte.

Zum Steuern des Erzeugers bzw. des Windparks, also insbesondere zum Erzeugen elektrischer Leistung mittels des wenigstens einen Windparks, empfängt die Regelgebietssteuerung von der Netzleitstelle eine einzustellende Austauschleistung, also einen Wert der einzustellenden Austauschleistung. Die Regelgebietssteuerung ist somit auch dazu eingerichtet, Information über eine angeforderte Austauschleistung von einer Leitstelle zu empfangen, beispielsweise über eine gesicherte Leitung.

Die Austauschleistung selbst ist dabei definiert als die Summe aller erzeugten und verbrauchten Leistungen der Erzeuger und Verbraucher, welche durch die Regelgebietssteuerung steuerbar ausgeführt sind. Ist die Summe positiv, herrscht innerhalb des Regelgebietes ein Leistungsüberschuss, der anderen Regelgebiete zur Verfügung gestellt werden kann, also mit diesen ausgetauscht werden kann. Ist die Summe negativ, herrscht innerhalb des Regelgebietes ein Leistungsdefizit, welches beispielsweise durch Abschalten von Verbrauchern kompensiert werden kann oder durch Bezug einer Leistung von einem anderen Regelgebiet, nämlich einer Austauschleistung.

Beträgt die einzustellende Austauschleistung nun beispielsweise 0 MW, so hat das Regelgebiet keine elektrische Leistung an das elektrische Versorgungsnetz bzw. andere Regelgebiete zu liefern. Beträgt die einzustellende Austauschleistung beispielsweise 100 MW, so hat das Regelgebiet diese Leistung als Überschuss mittels ihrer Erzeuger bereitzustellen bzw. diese innerhalb des Regelgebietes vorzuhalten - es wird also bewusst zu viel Leistung innerhalb des Regelgebietes erzeugt, um beispielsweise ein Defizit an Leistung in einem anderen Regelgebiet auszugleichen.

Anhand der einzustellenden Austauschleistung wird erfindungsgemäß ein Einsatzplan erstellt, insbesondere ein Einsatzplan durch die Regelgebietssteuerung erstellt. Der Einsatzplan ist dabei dazu vorgesehen, die Erzeuger und Verbraucher des Regelgebietes so zu steuern, dass eine Differenz der erreichten bzw. sich einstellenden Austauschleistung zur einzustellenden Austauschleistung minimal wird. Der Einsatzplan wird also so erstellt, dass die vorherrschende Austauschleistung, also die Ist-Austauschleistung, auch der einzustellende Austauschleistung entspricht.

Beispielsweise beträgt die einzustellende Austauschleistung 0 MW und die Verbraucher des Regelgebietes benötigen 20 MW. In diesem Falle sieht der Einsatzplan für den wenigstens einen Windpark eine zu erzeugende Leistung von 20 MW vor. Innerhalb des Regelgebietes werden dann 20 MW erzeugt und 20 MW verbraucht, sodass eine Ist-Austauschleistung von 0 MW vorliegt. Die erzeugte und die verbrauchte Leistung kompensieren sich somit innerhalb des Regelgebietes. Sollte der Erzeuger bzw. der Windpark aber die benötigte Leistung von 20 MW auf Grund von vorherrschenden Windverhältnisse nicht erzeugen können, so kann dies vom Erzeuger bzw. vom Windpark an die Regelgebietssteuerung zurückgemeldet werden. Die Regelgebietssteuerung meldet dies dann an die Netzleitstelle weiter, um von der Netzleitstelle eine neue einzustellende Austauschleistung zu erhalten oder weist andere Erzeuger des Regelgebietes an, mehr elektrische Leistung zu erzeugen.

Zur Durchführung des erfindungsgemäßen Verfahrens umfasst der Einsatzplan bevorzugt Sollwerte, besonders bevorzugt Wirkleistungs- und Blindleistungssollwerte, um damit die Erzeuger und insbesondere die Verbraucher des Regelgebietes zu steuern. Bevorzugt werden die Sollwerte dabei mittels wenigstens einer Randbedingung so berechnet, dass die Leistungsabgabe des wenigstens einen Windparks maximal ist. Mittels einer solchen Randbedingung kann beispielsweise eine maximale Integration der Erneuerbaren Energien innerhalb des Regelgebietes erreicht werden und gleichzeitig kann dem übergelagerten elektrischen Versorgungsnetz eine flexible Leistung bereitgestellt werden.

Es wird somit insbesondere vorgeschlagen, dass die einzustellende Austauschleistung und/oder der Einsatzplan mittels wenigstens eines iterativen Verfahrens optimiert werden, beispielsweise mittels einer optimierten Lastflussberechnung bzw. mittels eines optimized power flow. Die Berechnung des Einsatzplanes bzw. der Sollwerte für die Erzeuger kann beispielsweise dadurch erfolgen, dass das gesamte Regelgebiet zu einem Knoten bzw. Bilanzknoten zusammengefasst wird, wobei für den Bilanzknoten selbst eine eigene Lastflussanalyse durchgeführt wird, innerhalb derer die vom bzw. einem Windpark erzeugte Leistung maximal sein soll.

Der Windpark erzeugt anschließend in Abhängigkeit des Einsatzplanes bzw. der Sollwerte elektrische Leistung. Der Windpark speist somit eine elektrische Leistung in das elektrische Verteilnetz ein, die dem Betrage nach dem Sollwert des Einsatzplanes entspricht. Der Sollwert selbst kann dabei konstant sein oder über die Zeit variieren. In einer besonders bevorzugten Ausführungsform wird der Einsatzplan und demnach der Sollwert, der auch über die Zeit variieren kann, für ein vorbestimmtes Zeitintervall erstellt. Der Einsatzplan umfasst somit eine Vielzahl von Fahrplänen für die einzelnen Erzeuger und insbesondere für die einzelnen Verbraucher des Regelgebietes, die variierende Sollwerte über der Zeit aufweisen. Mit dem Einsatzplan wird somit eine Leistungsverteilung innerhalb des Regelgebietes gesteuert. Dafür erhalten Erzeuger und/oder Verbraucher dieses Regelgebietes Sollwerte, die auch über die Zeit variabel sein können. Jeder Sollwert kann als Fahrplan oder Einzelfahrplan bezeichnet werden, um dadurch zu betonen, dass als Sollwert auch ein Verlauf vorgegeben werden kann.

Besonders vorteilhaft bei dem erfindungsgemäßen Verfahren ist, dass das elektrische Verteilnetz mittels mehrerer Bilanzknoten, die mehrere Erzeuger und Verbraucher umfassen, deutlich einfacher gesteuert werden kann. Das überaus komplexe System eines elektrischen Verteilnetzes wird nämlich mittels des erfindungsgemäßen Verfahrens in mehrere Bilanzknoten zusammengefasst und hierdurch optimierter, insbesondere mit einer höheren Integration von Erneuerbaren Energien, betreiben. Es wird somit erfindungsgemäß vorgeschlagen, mittels eines mehrere Bilanzknoten aufweisenden Systems gezielt Austauschleistung bereitzustellen, wobei die einzelnen Bilanzknoten möglichst autark arbeiten, um eine hohe Integration von Erneuerbaren Energien zu gewährleisten. Diese hohe Autarkie eines jeden Regelgebietes wird dabei insbesondere dadurch ermöglicht, dass für jedes Regelgebiet eine gesonderte Lastflussanalyse durchgeführt wird, für die die Netzleitstelle lediglich Randbedingungen vorgibt.

Vorzugsweise werden Sollwerte durch die Regelgebietssteuerung an den wenigstens einen Windpark und bevorzugt an den zusätzlich wenigstens einen Verbraucher übertragen, wobei die Sollwerte in Abhängigkeit des Einsatzplanes so gewählt werden, dass die Differenz der Austauschleistung zur einzustellenden Austauschleistung minimal wird.

Der Einsatzplan wird somit mittels Sollwerten realisiert, die von der Regelgebietssteuerung an den Windpark übertragen werden. Hierfür weist der Windpark beispielsweise eine Windparksteuerung auf, die dazu eingerichtet ist, Sollwerte von der Regelgebietssteuerung zu empfangen.

Zudem ist die Regelgebietssteuerung dazu eingerichtet, Daten, insbesondere Sollwerte eines Einsatzplanes, an die Erzeuger und insbesondere an die Verbraucher des Regelgebietes zu übersenden. In einer weitergehenden Ausführungsform ist die Regelgebietssteuerung vorteilhafterweise in einer bzw. der Windparksteuerung funktional integriert. Dies ist besonders vorteilhaft, wenn der Windpark einer der größten bzw. der größte Erzeuger des Regelgebietes ist, da hierdurch Signallaufzeiten minimiert und eine höhere Ausfallsicherheit garantiert werden können.

Die Sollwerte werden ferner so gewählt, dass die Differenz der Austauschleistung zur einzustellenden Austauschleistung minimal ist. Die Sollwerte werden also so gewählt, dass die von der Netzleitstelle empfangene einzustellende Austauschleistung auch erzeugt bzw. umgesetzt werden kann. Dies ist insbesondere relevant in Bezug auf Erneuerbare Energie, insbesondere Windenergie, da diese von vorherrschenden Witterungen, insbesondere von den vorherrschenden Windverhältnissen, abhängig ist. Der Einsatzplan umfasst für einen solchen Fall auch Sollwerte, die es ermöglichen, dass die Verbraucher so gesteuert werden, dass sie weniger Leistung aufnehmen bzw. dass sie gedrosselt werden.

Vorzugsweise wird wenigstens ein Prognosewert für die von dem Regelgebiet für einen vorbestimmten Prognosezeitraum bereitstellbare Austauschleistung und/oder erzeugbare Erzeugerleistung durch die Regelgebietssteuerung bestimmt und der wenigstens eine Prognosewert von der Regelgebietssteuerung an die Netzleitstelle übertragen, wobei der Prognosewert bevorzugt einen Momentanwert umfasst, der die momentan erreichte Austauschleistung des Regelgebietes wiedergibt.

Die Regelgebietssteuerung bestimmt somit für das Regelgebiet, das bevorzugt zu einem Bilanzknoten zusammengefasst ist, eine erzeugbare Erzeugerleistung und/oder eine bereitstellbare Austauschleistung für einen vorbestimmten Zeitraum. Dies kann beispielsweise durch Aufsummierung von garantierten Mindestleistungen erfolgen. Beispielsweise kann der wenigstens eine Windpark auf Grund der vorherrschenden Windbedingungen 100 MW für die nächsten 15 Minuten garantieren und der zusätzliche Verbraucher des Regelgebietes, beispielsweise eine Fabrik, benötigt für dieselben 15 Minuten 80 MW. Die bereitstellbare Austauschleistung beträgt dann 20 MW. Die erzeugbare Erzeugerleistung von 80 MW und/oder die bereitstellbare Mindestleistung von 20 MW werden dann durch die Regelgebietssteuerung als Prognosewert bzw. Prognosewerte an die Netzleistelle übertragen.

Bevorzugt umfassen die Prognosewerte hierfür einen Momentanwert, also einen Ist-Wert, wobei dieser Wert die erreichte Austauschleistung wiedergibt. Besonders bevorzugt ist dieser Ist-Wert, also der Momentanwert, eine Ist-Leistung über einen kurzen Zeitraum, beispielsweise die Ist-Leistung über eine 1 Minute.

So beträgt beispielsweise der Ist-Wert 15 MW und die bereitstellbare Austauschleistung beträgt 20 MW. Die Regelgebietssteuerung meldet somit an die Netzleitstelle nicht nur die momentane Austauschleistung von 15 MW, sondern auch die mögliche Austauschleistung von 20MW. Dies ermöglicht dem Netzbetreiber, insbesondere der Netzleitstelle, die Betriebsführung des elektrischen Verteilnetzes mittels der bereitstellbaren Austauschleistung zu optimieren und insbesondere mehr Erneuerbare Energien in seinem elektrischen Verteilnetz zu integrieren. In diesem genannten Beispiel kann der Verteilnetzbetreiber nun über 5 MW frei verfügen - er kann also die Austauschleistung des Regelgebietes auf 20 MW gezielt erhöhen um andere Regelgebiete zu entlasten oder die einzustellende Austauschleistung bei 15 MW belassen, wodurch das Regelgebiet potentiell 5 MW Regelleistung aufweist, die beispielsweise dazu verwendet werden kann, die eingespeiste Leistung eines Windparks um 5 MW zu erhöhen und die eingespeiste Leistung eines konventionellen Kraftwerks um 5 MW zu verringern. Die Netzleitstelle kann diese Regelleistung anfordern, indem sie die gewünschte bzw. einzustellende Austauschleistung um diese Regelleistung erhöht. Das Bereitstellen der Regelleistung in dem betreffenden Regelgebiet wird dann durch die Regelgebietssteuerung vorgenommen.

Vorzugsweise ist der vorbestimmte Prognosezeitraum ein Tag oder weist eine Obergrenze von 24 Stunden auf.

Der vorbestimmte Prognosezeitraum für den Prognosewert beträgt somit höchstens 24 Stunden. Demnach wird wenigstens einmal pro Tag ein Prognosewert von der Regelgebietssteuerung an die Netzleitstelle übersandt. Die Häufigkeit des Datenaustausches erfolgt dabei insbesondere unter Berücksichtigung der geografischen Gegebenheiten und der Jahreszeit. So ist es beispielsweise vorteilhaft, in Jahreszeiten mit schnell wechselndem Wetter deutlich häufiger Prognosewerte zu übermitteln.

Vorzugsweise wird die einzustellende Austauschleistung in Abhängigkeit eines bzw. des Prognosewertes und/oder eines bzw. des Momentanwertes ermittelt.

Die einzustellende Austauschleistung, die von der Netzleitstelle übertragen und von der Regelgebietssteuerung empfangen wird, wird somit unter Berücksichtigung eines Prognosewertes ermittelt, der bevorzugt von der Regelgebietssteuerung bestimmt wurde.

Die einzustellende Austauschleistung wird somit unter Berücksichtigung einer Prognose bevorzugt iterativ ermittelt. Beispielsweise meldet die Regelgebietssteuerung, dass der wenigstens eine Windpark eine erzeugbare Erzeugerleistung von 60 MW für die nächsten 15 Minuten aufweist. Die Netzleitstelle ermittelt dann unter Berücksichtigung aller erzeugbaren Erzeugerleistungen beispielsweise eine optimale Austauschleistung von 0 MW. Diese optimale Austauschleistung wird dann von der Netzleitstelle an die Regelgebietssteuerung als einzustellende Austauschleistung übertragen. Die Regelgebietssteuerung empfängt ihrerseits diese einzustellende Austauschleistung und ermittelt hieraus eine Einsatzplan für das Regelgebiet für die nächsten 15 Minuten, der einen über die Zeit variierenden Sollwert für den wenigstens einen Windpark umfasst. Beispielsweise beträgt der Sollwert 40 MW für die ersten 5 Minuten der nächsten 15 Minuten und 55 MW für die letzten 10 Minuten der nächsten 15 Minuten. Je nach Wahl der Rand- und Iterationsbedingungen innerhalb des Verfahrens werden also elektrische Leistungen mittels des wenigstens einen Windparks in Abhängigkeit des Einsatzplanes erzeugt, der in Abhängigkeit eines Prognosewertes erstellt wurde.

Vorzugsweise basiert der Prognosewert auf Kenngrößen des Erzeugers, insbesondere des Windparks und/oder wenigstens eines weiteren Erzeugers, insbesondere jeweils auf der Nennleistung des Erzeugers, insbesondere des Windparks, bzw. des wenigstens einen weiteren Erzeugers, und/oder auf einer Wettervorhersage für das Regelgebiet.

Der Prognosewert basiert somit auf Zustandsgrößen des Regelgebietes, beispielsweise auf der Nennleistung der Erzeuger des Regelgebietes. Ein solcher Prognosewert kann beispielsweise eine Obergrenze bilden oder als Bezugsgröße dienen. Sofern der Prognosewert beispielsweise einen Windpark umfasst, der für die nächsten 24 Stunden nur eine Leistung von 10 MW garantieren kann, werden die Randbedingungen so gesetzt, dass der Fahrplan für den Windpark bzw. die Sollwerte für den Windpark diese Leistung von 10 MW nicht überschreiten. Die Kenngrößen werden somit als Randbedingungen zur Optimierung der Betriebsführung des elektrischen Verteilnetzes verwendet.

Besonders vorteilhaft ist ferner die Verwendung einer Wettervorhersage für das Regelgebiet um den Prognosewert für das Regelgebiet zu ermitteln. Die unter einer Wettervorhersage ermittelten Prognosewerte verbessern können insbesondere im Bereich der Erneuerbaren Energien die Qualität der Prognosewerte um ein Vielfaches verbessern.

Vorzugsweise ist die Austauschleistung des Regelgebietes durch einen Blindleistungswert und einen Wirkleistungswert gekennzeichnet.

Die Austauschleistung umfasst somit einen positiven oder negativen Blindleistungswert und einen positiven oder negativen Wirkleistungswert. Ein positiver Leistungswert beschreibt ein Mehr an Leistung innerhalb des Regelgebietes, die dem elektrischen Versorgungsnetz bzw. anderen Regelgebieten als Austauschleistung zur Verfügung gestellt wird. Ein negativer Leistungswert beschreibt ein Weniger an Leistung innerhalb des Regelgebietes, die dem elektrischen Verteilnetz als Austauschleistung entnommen wird.

Besonders vorteilhaft hierbei ist, dass nicht nur reine Wirkleistung, sondern auch Blindleistung als Austauschleistung innerhalb des Verfahrens zur Verfügung gestellt wird. Eine solche Vorgehensweise ermöglicht insbesondere eine kostenoptimierte Betriebsführung des elektrischen Verteilnetzes.

Vorzugsweise umfasst der Einsatzplan ein vorbestimmtes Zeitintervall, das optimierte Blind- und/oder Wirkleistungssollwerte aufweist, wobei das vorbestimmte Zeitintervall besonders bevorzugt 15 Minuten oder bevorzugt 5 Minuten oder bevorzugt 1 Minute beträgt.

Der Einsatzplan ist somit durch eine Vielzahl von Blind- und/oder Wirkleistungssollwerten ausgebildet, die über die Zeit abgetragen bzw. veränderlich sind. Die Durchführung des Einsatzplanes ist durch das vorbestimmte Zeitintervall begrenzt. Beispielsweise umfasst der Einsatzplan Wirkleistungssollwerte für alle Erzeuger des Regelgebietes für die nächsten 15 Minuten. Innerhalb dieser 15 Minuten können diese Wirkleistungssollwerte sich auch verändern. Beispielsweise 15 MW für 5 Minuten und dann 20 MW für 10 Minuten, sodass der Wirkleistungssollwert für das vorbestimmte Zeitintervall dem Betrage nach zwei unterschiedliche Sollwerte aufweist.

Der Einsatzplan selbst wird ferner zyklisch in Abhängigkeit des vorbestimmten Zeitintervalls neu erstellt, sodass die Erzeuger durchgehend einen Einsatzplan anliegend haben, um in Abhängigkeit des Einsatzplanes elektrische Leistung zu erzeugen.

Erfindungsgemäß sind mehrere Regelgebiete vorgesehen und der Einsatzplan wird so bestimmt, dass die zu erreichenden Austauschleistungen der Regelgebiete dem Betrage nach minimiert werden und/oder die zu erreichenden Austauschleistungen der Regelgebiete über ein Optimierungsverfahren minimiert werden, insbesondere dass die zu erreichenden Austauschleistungen der Regelgebiete über ein Verfahren der kleinsten Quadrate minimiert werden und/oder die zu erreichenden Austauschleistungen der Regelgebiete über eine Kostenfunktion optimiert wird und/oder eine potentielle Emission von Schadstoffen durch konventionelle Erzeuger des elektrischen Versorgungsnetzes, insbesondere der Regelgebiete, wie beispielsweise Stickoxide oder CO₂, minimiert wird.

Das Verfahren wird somit insbesondere dazu verwendet, die Betriebsführung des gesamten elektrischen Versorgungsnetzes zu optimieren. Beispielsweise werden die Austauschleistungen zwischen den einzelnen Regelgebieten optimiert, insbesondere so, dass die physikalische Belastung für das elektrische Versorgungsnetz bzw. Verteilnetz minimiert wird. Es ist ferner aber auch möglich, mittels des vorgeschlagenen Verfahrens den Schadstoffstoß bei der Erzeugung der elektrischen Energie zu verringern, beispielsweise dadurch, dass als Randbedingung festgelegt wird, dass Erneuerbare Energie mit maximal möglicher Leistung in das elektrische Versorgungsnetz bzw. in die entsprechenden Regelgebiete einspeisen.

Vorzugsweise weist jedes Regelgebiet genau eine Regelgebietssteuerung auf.

Es wurde erkannt, dass es insbesondere in Bezug auf zukünftige Herausforderung besonders günstig ist, die Anzahl der Regelgebietssteuerungen zu begrenzen. Hierfür wird vorgeschlagen, dass jedes Regelgebiet genau eine Regelgebietssteuerung aufweist, die dazu eingerichtet ist, das entsprechende Regelgebiet zu steuern.

Vorzugsweise ist die Regelgebietssteuerung dazu eingerichtet, mit weiteren Regelgebietssteuerungen weiterer Regelgebiete zu kommunizieren, insbesondere um Daten zum Steuern der Regelgebiete auszutauschen.

Die auszutauschenden Daten können dabei dieselben sein, die die Regelgebietssteuerungen mit der Netzleitstelle austauschen.

Vorzugsweise weist das elektrische Verteilnetz N Netzleitstellen und R Regelgebiete mit jeweils S Regelgebietssteuerungen auf, wobei R ≥ S ≥ N ist, bevorzugt mit R ≥ 5 N und R = S und N =1.

Es wurde erkannt, dass eine Reduzierung der Steuerungseinheit sich besonders günstig auf das Verfahren auswirkt. Es wird somit vorgeschlagen, dass wenigstens so viele Regelgebiete wie Regelgebietssteuerungen vorgesehen sind. Es können aber auch weniger Regelgebietssteuerungen vorgesehen sein, wenn eine Regelgebietssteuerung mehrere Regelgebiete steuert. Es sind auch wenigstens so viele Regelgebiete wie Netzleitstellen vorgesehen. Eine Netzleitstelle ist somit für eine oder mehrere Regelgebiete vorgesehen.

In einer besonders bevorzugten Ausführungsform weist das elektrische Verteilnetz bzw. das elektrische Versorgungsnetz genau eine Netzleitstelle auf und das elektrische Verteilnetz bzw. das elektrische Versorgungsnetz ist bspw. in wenigstens 5 Regelgebiete mit jeweils genau einer Regelgebietssteuerung unterteilt. Bevorzugt werden die wenigstens 5 Regelgebiete zur Durchführung des Verfahrens in jeweils einem Bilanzknoten zusammengefasst.

Unter einem vorstehend oder nachstehend beschriebenen Knoten bzw. Bilanzknoten ist eine sich intern selbst organisierende elektrische Einheit zu verstehen, welche von außen betrachtet eine Blackbox ist. Die Netzleitstelle oder andere Knoten bzw. Bilanzknoten kennen also den internen Aufbau eines Knotens bzw. eines Bilanzknotens nicht oder nur bedingt.

Vorzugsweise werden die Erzeuger des Regelgebietes so gesteuert, dass die von den Erzeugern bereitgestellte Blindleistung verlustleistungsminimal optimiert ist.

Die Randbedingungen zur Optimierung werden somit so gewählt, dass die Blindleistungserzeugung bzw. Blindleistungsbereitstellung möglichst autark von der Wirkleistungserzeugung bzw. Wirkleistungsbereitstellung erfolgt. Das erfindungsgemäße Verfahren kann somit besonders vorteilhaft dazu verwendet werden, die Erzeugung der Blindleistung von der Erzeugung der Wirkleistung zu entkoppeln und/oder die durch die Blindleistungsbereitstellung verursachten Wirkleistungsverluste zu minimieren.

Die vorliegende Erfindung wird nun nachfolgend exemplarisch anhand von Ausführungsbeispielen unter Bezugnahme auf die begleitenden Figuren näher erläutert.
- Fig. 1: zeigt schematisch eine perspektivische Ansicht einer Windenergieanlage.
- Fig. 2: zeigt schematisch einen Aufbau eines erfindungsgemäßen Windparks.
- Fig. 3: zeigt schematisch einen Aufbau eines elektrischen Versorgungsnetzes.
- Fig. 4a: zeigt schematisch einen Aufbau eines elektrischen Verteilnetzes,
- Fig. 4b: zeigt schematisch einen Organisationsaufbau des erfindungsgemäßen Verfahrens.
- Fig. 5: zeigt schematisch einen Ablauf zur Erstellung eines Einsatzplanes zum Einhalten einer einzustellenden Austauschleistung durch eine erfindungsgemäße Regelgebietssteuerung und
- Fig. 6: zeigt einen schematischen Aufbau 600 eines erfindungsgemäßen Verfahrens in einer Ebenendarstellung.

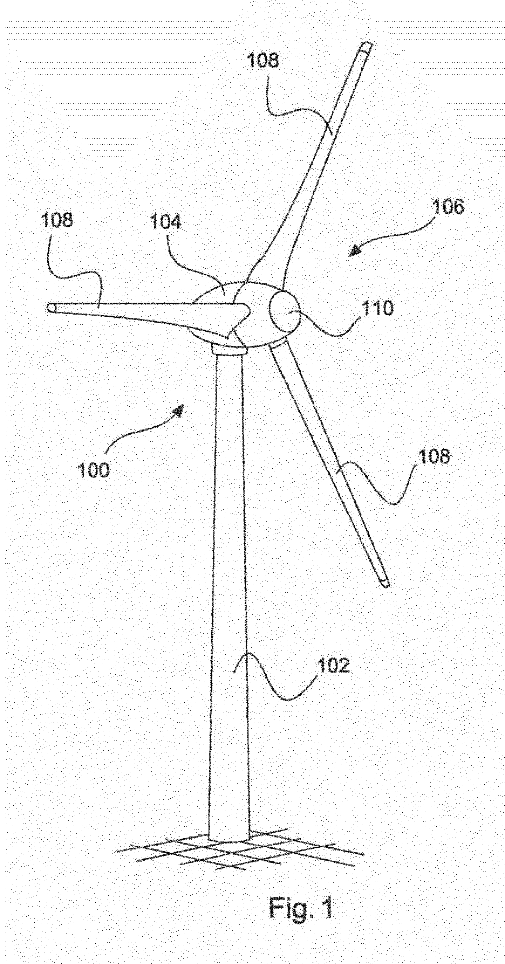

Fig. 1 zeigt eine Windenergieanlage 100, die mittels einer Windenergieanlagesteuereinheit dazu eingerichtet ist mit einer Windparksteuereinheit eines Windparks zu kommunizieren, um eine elektrische Leistung in Abhängigkeit eines Einsatzplanes zu erzeugen.

Die Windenergieanlage weist einen Turm 102 und eine Gondel 104 auf. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

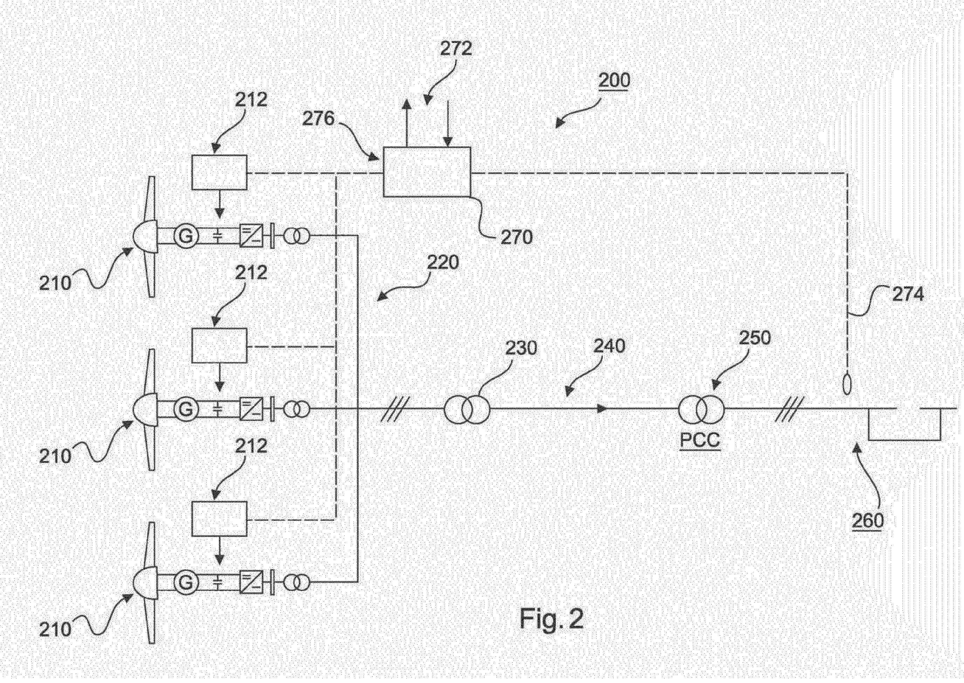

Fig. 2 zeigt einen Aufbau eines erfindungsgemäßen Windparks 200. Der Windpark 200 weist exemplarisch drei baugleiche Windenergieanlagen 210 auf, die über ein Windparknetz 220 miteinander verbunden sind. Die Windenergieanlagen 210 umfassen eine Windenergieanlagensteuereinheit 212 und erzeugen jeweils eine elektrische Leistung die über das Windparknetz 220 mittels eines Windparktransformators 230, einer Zuleitung 240 und einem Netztransformator 250 an einem Netzanschlusspunkt PCC in das elektrische Verteilnetz 260 eingespeist wird.

Der Windpark 200 weist eine Windparksteuerungseinheit 270 auf, die mittels einer Kommunikationsstelle 272 dazu eingerichtet ist, Daten mit einer Regelgebietssteuerung auszutauschen und insbesondere von dieser einen Einsatzplan bzw. Leistungssollwerte zu empfangen, um eine elektrische Leistung in Abhängigkeit des Einsatzplanes zu erzeugen. Hierfür weist die Windparksteuereinheit 270 ferner eine Messeinrichtung 274 zum Erfassen von Netzparametern sowie eine Steuerschnittstelle 276 zum Steuern der Windenergieanlagen 210 auf. Mittels der Steuerschnittstelle 276 ist die Windparksteuereinheit 270 dazu eingerichtet mit den Windenergieanlagensteuereinheit 212 der Windparkanlagen 210 des Windparks 200 zu kommunizieren, insbesondere um den Windenergieanlagen 210 Leistungssollwerte vorzugeben, um mittels des Windparks 200 eine elektrische Leistung in Abhängigkeit eines Einsatzplanes zu erzeugen.

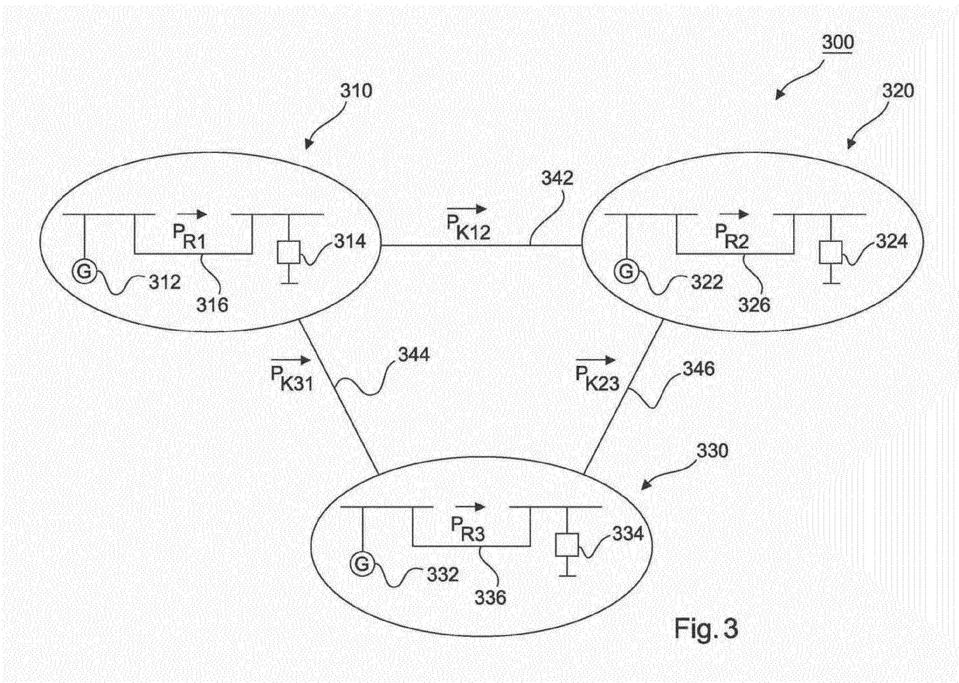

Fig. 3 zeigt den schematischen Aufbau eines elektrischen Versorgungsnetzes 300, wobei das elektrische Versorgungsnetz drei elektrische Verteilnetze 310, 320, 330 umfasst, die mittels Kuppelleitungen 342, 344, 346 verbunden sind.

Jedes Verteilnetz 310, 320, 330 weist eine Vielzahl von Erzeugern 312, 322, 332 und Verbrauchern 314, 324, 334 auf, die jeweils über Leitungen 316, 326, 336 miteinander verbunden sind.

Innerhalb eines jeden Verteilnetzes 310, 320, 330 wird durch Steuerung der Erzeuger 312, 322, 332 eine Regelleistung PR1, PR2, PR3 bereitgestellt, um ein Leistungsgleichgewicht zwischen Erzeugern 312, 322, 332 und Verbrauchern 314, 324, 334 einzustellen. Die Regelleistung wird somit dazu verwendet, eine Abweichung zwischen erzeugter und verbrauchter Leistung zu kompensieren. Sofern diese Regelleistung PR1, PR2, PR3 innerhalb eines jeden Verteilnetzes 310, 320, 330 nicht ausreicht, um eine notwendige Betriebssicherheit zu gewährleisten, können die einzelnen Verteilnetze 310, 320, 330 über Kuppelleitungen 342, 344, 346 eine Kuppelleistung PK12, PK23, PK31 von benachbarten Verteilnetzen 310, 320, 330 beziehen, um ein Leistungsgleichgewicht, also ein Gleichgewicht zwischen erzeugter und verbrauchter Leistung, innerhalb des Verteilnetzes 310, 320, 330 herzustellen, beispielsweise, um eine Störung innerhalb des Netzregelverbundes 310, 320, 330 zu verhindern. Die Kuppelleitungen 342, 344, 346 sollen exemplarisch das elektrische Übertragungsnetz des elektrischen Versorgungsnetzes andeuten, welches die einzelnen elektrischen Verteilnetze 310, 320, 330 miteinander verbindet.

Die Betriebsführung der einzelnen Verteilnetze 310, 320, 330 erfolgt durch eine Reihe von Steuerungsmechanismen, wie beispielsweise einem Bilanzkreismanagement.

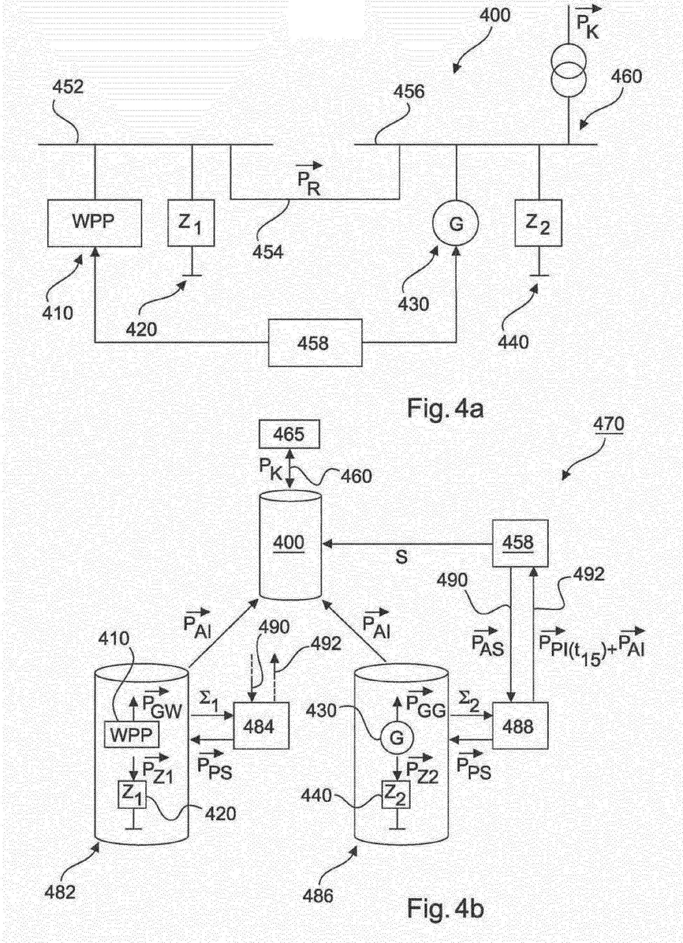

Fig. 4a zeigt schematisch einen Aufbau eines elektrischen Verteilnetzes 400 bzw. eines Teils davon. Das in Figur 4a gezeigte elektrische Verteilnetz 400 weist einen Windpark 410, einen ersten Verbraucher 420, einen konventionellen Erzeuger 430, und einen weiteren Verbraucher 440 auf, wobei die Leitungen 452, 454, 456 des elektrischen Verteinetzes 400 miteinander verbunden sind. Der Windpark 410 und der konventionelle Erzeuger 430 werden dabei üblicherweise in Abhängigkeit der Netzfrequenz so gesteuert, dass sich innerhalb des elektrischen Verteilnetzes 400 ein Leistungsgleichgewicht einstellt, welches durch den Austausch von Regelleistung PR innerhalb des elektrischen Verteilnetzes 400 angedeutet ist. Das Steuern der Erzeuger kann dabei durch eine Leitstelle 458 erfolgen. Ferner ist das elektrische Verteilnetz mittels einer Kuppelleitung 460 mit dem elektrischen Versorgungsnetz bzw. weiteren Verteilnetzen verbunden, um ggf. aus dem elektrischen Versorgungsnetz eine Kuppelleistung PK aufzunehmen, sofern Leistung benötigt wird, um das Leistungsgleichgewicht im elektrischen Verteilnetz 400 herzustellen.

Fig. 4b zeigt schematisch einen Organisationsaufbau des erfindungsgemäßen Verfahrens 470 unter Bezugnahme des in Fig. 4a gezeigten elektrischen Verteilnetzes 400, welches eine Netzleitstelle 458 aufweist, um das elektrische Verteilnetz 400 mittels Signalen S zu steuern, wobei das elektrische Verteilnetz 400 mittels Kuppelleitungen mit anderen elektrischen Verteilnetzen bzw. dem elektrischen Versorgungsnetz 465 verbunden ist.

Erfindungsgemäß wurde das beispielhaft gezeigte elektrische Verteilnetz 400 der Figur 4a in zwei Regelgebiete unterteilt, d.h. mehrere Erzeuger und Verbraucher werden gegenüber dem elektrischen Verteilnetz 400 zu einem Bilanzknoten 482, 486 zusammengefasst, die jeweils ein Regelgebiet bilden bzw. für ein Regelgebiet stehen. Fig. 4b zeigt somit eine vorgeschlagene Einteilung der Struktur der Figur 4a in Regelknoten 482 und 486, die sich jeweils selbstständig regeln, nämlich so, dass sie die angeforderte Austauschleistung bereitstellen, bzw. empfangen. In der internen Umsetzung kann jeder Regelknoten dazu flexibel seine Verbraucher und Erzeuger steuern.

Der Regelknoten bzw. Bilanzknoten 482 umfasst den Windpark 410 und den zusätzlichen Verbraucher 420. Der Regelknoten bzw. Bilanzknoten 486 umfasst den konventionellen Erzeuger 430 und den Verbraucher 440.

Die Erzeuger und Verbraucher der Bilanzknoten, also die Erzeuger und Verbraucher 410, 420, 430, 440 innerhalb der Regelgebiete 482, 486, werden jeweils über die Regelgebietssteuerungen 484, 488 angesteuert, die mit der Netzleitstelle 458 zum Austausch von Daten verbunden sind.

Über eine Datenleitung 490 empfangen die Regelgebietssteuerungen 484, 488 die einzustellende Austauschleistung PAS von der Netzleitstelle 458. Die Regelgebietssteuerungen 484, 488 erstellen daraus einen Einsatzplan zum Steuern der Erzeuger und Verbraucher, wobei der Einsatzplan so erstellt wird, dass eine Differenz der erreichten Austauschleistung PAI zur einzustellen Austauschleistung PAS minimal wird.

Hierzu übertragen die Regelgebietssteuerungen 484, 488 Wirk- und Blindleistungssollwerte PPS an die Erzeuger der Regelgebiete, wobei die Wirk- und Blindleistungssollwerte PPS in Abhängigkeit des Einsatzplanes so gewählt werden, dass die Differenz der Austauschleistung zur einzustellenden Austauschleistung minimal wird.

Die Regelgebietssteuerungen 484, 488 bestimmen daraufhin einen Prognosewert PPI, der mittels einer Datenleitung 490 an die Netzleitstelle 458 übermittelt wird.

Der Prognosewert PPI umfasst dabei eine bereitstellbare Austauschleistung der entsprechenden Regelgebiete 482, 486 für einen vorbestimmten Zeitraum t15 und die aktuelle Austauschleistung PAI, wobei der Prognosewert PPI auf einer Wettervorhersage basiert. Die aktuelle Austauschleistung PAI setzt sich hierbei aus der Differenz der Verbraucherleistung PZ1, PZ2 zur Erzeugerleistung PGW, PGG zusammen, welche im Bezugspfeilsystem auch als Summe Σ1 bzw. Σ(PGW+PZ1), Σ2 bzw. Σ(PGG+PZ2) angegeben werden kann.

Die Netzleistelle 458 empfängt die Prognosewerte PPI der Regelgebiete für einen vorbestimmten Zeitraum, beispielsweise einen Prognosewert PPI für die nächsten 24 Stunden. Die Netzleitstelle 458 erstellt daraufhin neue einzustellende Austauschleistungen PAS für die Regelgebiete, wobei hierfür ein Optimierungsalgorithmus verwendet wird, der die jeweiligen Prognosewerte PPI berücksichtigt. Einige Werte, wie die über die Datenleitung 490 einzustellende Austauschleistung PAS, sind mit gleichen Bezugszeichen bzw. Abkürzungen in den Figuren gekennzeichnet, können besonders für die unterschiedlichen Bilanzknoten 482 und 486, bzw. unterschiedliche Regelgebiete, dennoch unterschiedliche Werte annehmen.

Die Erzeuger 410, 430 erzeugen dann in Abhängigkeit der Wirk- und Blindleistungssollwerte PPS, die in Abhängigkeit des Einsatzplanes durch Regelgebietssteuerungen 484, 488 erstellt wurden, eine entsprechende elektrische Leistung PGW, PGG.

In einer besonders bevorzugten Ausführungsform weist das erfindungsgemäße Verfahren somit zwei Optimierungszyklen auf. Zum einen sammelt die Netzleitstelle 458 sämtliche Prognosewerte PPI und Momentanwerte PAI aller Regelgebiete 482, 486 um hieraus eine Austauschleistung für jedes Regelgebiet 482, 486 zu berechnen und zum anderen optimiert jede Regelgebietssteuerung 484, 488 jedes Regelgebiet 482, 486 in Abhängigkeit der einzustellenden Austauschleistung PAS so, dass die Regelgebiete wenigsten gemäß einer einstellbaren Randbedingung arbeitet. Beispielsweise kann als Randbedingung für die Optimierung eines Regelgebietes die maximale Verwendung Erneuerbarer Energien verwendet werden, sodass die von der Netzleitstelle vorgegebene Austauschleistung mittels maximaler Auslastung Erneuerbarer Energien erreicht wird, also beispielsweise alle Windparks in Volllast betrieben werden. Das Verfahren selbst kann dabei beispielsweise mit einem Zyklus von 15 Minuten ausgeführt werden, d.h. dass alle 15 Minuten neue Werte übermittelt und berechnet werden.

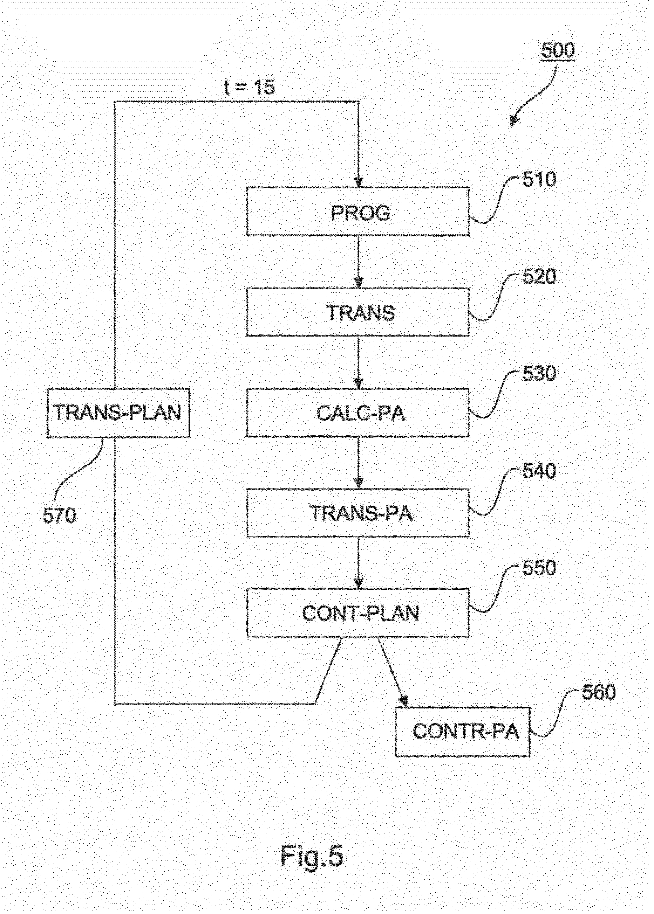

Fig. 5 zeigt schematisch einen Ablauf zur Erstellung eines Einsatzplanes 500 zum Einhalten einer einzustellenden Austauschleistung durch eine erfindungsgemäße Regelgebietssteuerung.

In einem ersten Schritt 510 bestimmt die Regelgebietssteuerung einen Prognosewert für die von dem Regelgebiet bereitstellbare Austauschleistung für einen vorbestimmten Prognosezeitraum. Der Prognosewert umfasst dabei einen 1-minütigen Momentanwert, der die Ist-Austauschleistung abbildet sowie eine Prognose über eine garantierte Austauschleistung für die nächsten 24 Stunden. Die Prognose über die Leistungen erfolgt dabei unter Verwendung eines Wetterberichtes, insbesondere unter Verwendung einer Wetterprognose. Dies ist durch den PROG-Block angedeutet.

Anschließend wird in einem nächsten Schritt 520 dieser Prognosewert, der auch als Prognosefahrplan bezeichnet werden kann, an die Netzleistelle übersendet. Dies ist durch den TRANS-Block angedeutet.

Die Netzleitstelle empfängt sämtliche Prognosewerte, die auch Ist-Werte beinhalten können, und optional Fahrpläne aller am Verfahren beteiligter Erzeuger und Verbraucher oder zumindest einige solcher Fahrpläne, in einem nächsten Schritt 530 und berechnet daraus jeweils eine einzustellende Austauschleistung für jedes Regelgebiet. Beispielsweise unter Verwendung der Randbedingung, dass die zu erreichenden Austauschleistungen eines jeden Regelgebietes dem Betrage nach minimal ist. Ein solches Vorgehen führt dazu, dass jedes Regelgebiet maximal autark ihren jeweiligen Einsatzplan bestimmen kann, da die einzustellende Austauschleistung gegen 0 MW geht. Dies ist durch den CALC-PA-Block angedeutet.

Anschließend wird in einem nächsten Schritt 540 die einzustellende Austauschleistung an die Regelgebietssteuerung übermittelt. Dies ist durch den TRANS-PA-Block angedeutet.

Die Regelgebietssteuerung empfängt in einem nächsten Schritt 550 einen Wert über die einzustellende Austauschleistung für das Regelgebiet als Sollwert und berechnet in Abhängigkeit von diesem einen Einsatzplan zum Einhalten der einzustellenden Austauschleistung, wobei der Einsatzplan zum Steuern der Erzeuger und Verbraucher vorgesehen ist und so erstellt wird, dass eine Differenz der erreichten Austauschleistung zur einzustellenden Austauschleistung minimal wird. Um den Einsatz von Erzeugern und Verbrauchern optimal zu steuern, wird die Prognose der wahrscheinlichen Sollwerte berücksichtigt. So kann der Einsatz von steuerbaren Verbrauchern und Erzeugern flexibel optimiert werden. Beispielsweise wird der Einsatzplan unter der Verwendung der Randbedingung erstellt, dass die abgegebene Leistung der Erneuerbaren Energien maximal ist. Dies führt dann dazu, dass das Regelgebiet ihre elektrische Energie ausschließlich aus Erneuerbaren Energien, beispielsweise Windparks, erzeugt. Dies ist durch den CONT-PLAN-Block angedeutet.

Anschließend übersendet die Regelgebietssteuerung in einem weiteren Schritt 560 die Einsatzpläne bzw. die Sollwerte der Einsatzpläne an die Erzeuger des Regelgebietes, die dann elektrische Leistung in Abhängigkeit des Einsatzplanes erzeugen. Dies ist durch den CONTR-PA-Block angedeutet.

Zudem übersendet die Regelgebietssteuerung in einem weiteren Schritt 570 den Einsatzplan als Prognosewert für die von dem Regelgebiet bereitstellbare Austauschleistung für den vorbestimmten Prognosezeitraum an die Netzleitstelle. Dies ist durch den TRANS-PLAN-Block angedeutet.

Die Erstellung des Einsatzplanes ist somit zyklisch, beispielsweise mit einer Zykluszeit von 15 Minuten. D.h. der Einsatzplan und sämtliche Sollwerte werden in einem Zeitabstand von 15 Minuten wieder neu berechnet.

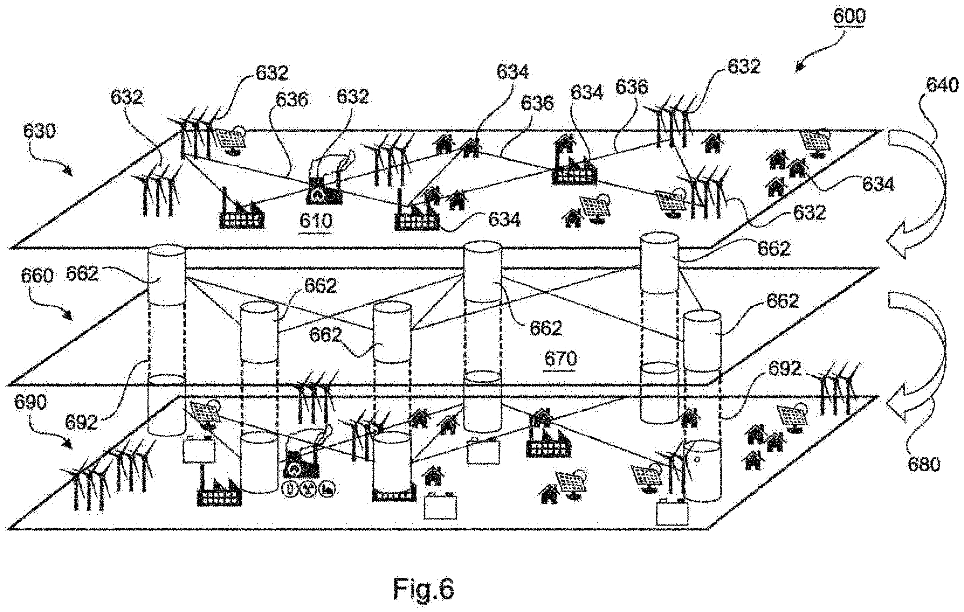

Fig. 6 zeigt einen schematischen Aufbau 600 eines erfindungsgemäßen Verfahrens in einer Ebenendarstellung, umfassend eine erste, eine zweite und eine dritte Ebene 630, 660, 690.

In der ersten Ebene 630 ist ein elektrisches Verteilnetz 610 abgebildet, welches mehrere Erzeuger 632 und mehrere Verbraucher 634 aufweist, die über elektrische Leitungen 636 miteinander verbunden sind.

Mittels des erfindungsgemäßen Verfahrens wird das elektrische Verteilnetz nun in mehrere Regelgebiete 662 bzw. Knoten unterteilt, wobei die Regelgebiete 662 bzw. Knoten jeweils mehrere Erzeuger und/oder Verbraucher umfassen.

Erfindungsgemäß wird das elektrische Verteilnetz 610 somit in einem Knotenmodell 670 zusammengefasst. Diese Zusammenfassung ist durch den ersten Überführungspfeil 640 angedeutet und dieses Knotenmodell 670 ist dabei in der zweiten Ebene 660 dargestellt.

Das elektrische Verteilnetz 610 wird also mittels eines Knoten- bzw. Regelgebietsmodells 670 gesteuert. Das ist durch den zweiten Überführungspfeil 680 angedeutet und das Ergebnis in der dritten Ebene 690 dargestellt. Die Überführung des Knotenmodells 670 auf das elektrische Verteilnetz 610 ist ferner durch Linien 692 angedeutet.

## Patentansprüche

1. Verfahren zum Steuern eines elektrischen Verteilnetzes (400), welches über Kuppelleitungen mit anderen elektrischen Verteilnetzen verbunden ist, wobei
- eine Netzleitstelle (458) zum Steuern des elektrischen Verteilnetzes (400) vorgesehen ist und das elektrische Verteilnetz mehrere Regelgebiete (482, 486) umfasst, wobei
- jedes Regelgebiet ein Zusammenschluss mehrerer Erzeuger und/oder Verbraucher ist, die in der Betriebsführung gegenüber Dritten zu einem Bilanzknoten zusammengefasst sind, wobei jedes Regelgebiet eine Austauschleistung (PAI) an das elektrische Verteilnetz (400) abgibt oder von ihm aufnimmt, und wobei
- wenigstens eines der Regelgebiete (482) wenigstens einen Windpark (410) zum Erzeugen einer Erzeugerleistung (PGW) und zusätzlich wenigstens einen Verbraucher (420) zum Aufnehmen einer Verbraucherleistung (PZ1) aufweist, wobei wenigstens eine Regelgebietssteuerung (484) zum Steuern des wenigstens einen Windparks (410) vorgesehen ist, und das Verfahren umfasst die Schritte:
- Empfangen eines Wertes einer einzustellenden Austauschleistung (PAS) von der Netzleitstelle (458) durch die Regelgebietssteuerung (484), wobei die Austauschleistung (PAS) definiert ist als eine Summe der Verbraucherleistung (PZ1) und der Erzeugerleistung (PGW),
- Erstellen eines Einsatzplanes zum Einhalten oder Erreichen der einzustellen Austauschleistung (PAS) durch die Regelgebietssteuerung (484), wobei der Einsatzplan zum Steuern der Erzeuger (410) und Verbraucher (420) vorgesehen ist und so erstellt wird, dass eine Differenz der erreichten Austauschleistung (PAI) zur einzustellenden Austauschleistung (PAS) minimal wird,
- Übertragen von Sollwerten (PPS) durch die Regelgebietssteuerung (484) an den wenigstens einen Windpark (410) und bevorzugt an den zusätzlich wenigstens einen Verbraucher (420), wobei die Sollwerte in Abhängigkeit des Einsatzplanes so gewählt werden, dass die Differenz der Austauschleistung (PAI) zur einzustellenden Austauschleistung (PPS) minimal wird, wobei der Einsatzplan für mehrere Regelgebiete vorgesehen ist und so bestimmt wird, dass die zu erreichenden Austauschleistungen der Regelgebiete dem Betrage nach minimiert werden,
und
- Erzeugen elektrischer Leistung (PGW) mittels des wenigstens einen Windparks (410) in Abhängigkeit des Einsatzplanes, wodurch innerhalb des Regelgebietes ein Leistungsüberschuss herrscht, der anderen Regelgebieten als Austauschleistung über Kuppelleitungen zur Verfügung gestellt wird.

2. Verfahren zum Steuern eines elektrischen Verteilnetzes nach Anspruch 1, ferner umfassend die Schritte:
- Bestimmen wenigstens eines Prognosewertes (PPI) für die von dem Regelgebiet (482) für einen vorbestimmten Prognosezeitraum (t15) bereitstellbare Austauschleistung und/oder erzeugbare Erzeugerleistung durch die Regelgebietssteuerung,
und
- Übermitteln des wenigstens einen Prognosewertes von der Regelgebietssteuerung an die Netzleitstelle, wobei der Prognosewert bevorzugt einen Momentanwert (PAI) umfasst bzw. ist, der die momentan erreichte Austauschleistung des Regelgebietes wiedergibt.

3. Verfahren zum Steuern eines elektrischen Verteilnetzes nach Anspruch 2, **dadurch gekennzeichnet, dass** der vorbestimmte Prognosezeitraum ein Tag ist oder eine Obergrenze von 24 Stunden aufweist.

4. Verfahren zum Steuern eines elektrischen Verteilnetzes nach einem der vorstehenden Ansprüche, **dadurch gekennzeichnet, dass**
- die einzustellende Austauschleistung in Abhängigkeit eines bzw. des Prognosewertes und/oder eines bzw. des Momentanwertes ermittelt wird.

5. Verfahren zum Steuern eines elektrischen Verteilnetzes nach einem der vorstehenden Ansprüche, **dadurch gekennzeichnet, dass**
- der Prognosewert auf Kenngrößen des Windparks basiert und/oder auf Kenngrößen wenigstens eines weiteren Erzeugers basiert, insbesondere jeweils auf der Nennleistung des Erzeugers bzw. des Windparks bzw. des wenigstens einen weiteren Erzeugers, und/oder auf einer Wettervorhersage für das Regelgebiet.

6. Verfahren zum Steuern eines elektrischen Verteilnetzes nach einem der vorstehenden Ansprüche, **dadurch gekennzeichnet, dass**
- die Austauschleistung des Regelgebietes durch einen Blindleistungswert und einen Wirkleistungswert gekennzeichnet ist.

7. Verfahren zum Steuern eines elektrischen Verteilnetzes nach einem der vorstehenden Ansprüche, **dadurch gekennzeichnet, dass**
- der Einsatzplan ein vorbestimmtes Zeitintervall umfasst, das optimierte Blind- und/oder Wirkleistungssollwerte aufweist, wobei das vorbestimmte Zeitintervall besonders bevorzugt 15 Minuten oder bevorzugt 5 Minuten oder bevorzugt 1 Minute beträgt.

8. Verfahren zum Steuern eines elektrischen Verteilnetzes nach einem der vorstehenden Ansprüche, **dadurch gekennzeichnet, dass** mehrere Regelgebiete vorgesehen sind und der Einsatzplan so bestimmt wird, dass
- die zu erreichenden Austauschleistungen der Regelgebiete über ein Optimierungsverfahren minimiert werden, insbesondere, dass die zu erreichenden Austauschleistungen der Regelgebiete über ein Verfahren der kleinsten Quadrate minimiert werden und/oder
- die zu erreichenden Austauschleistungen der Regelgebiete über eine Kostenfunktion optimiert wird und/oder
- eine potentielle Emission von Schadstoffen durch konventionelle Erzeuger des elektrischen Versorgungsnetzes, insbesondere der Regelgebiete, wie beispielsweise Stickoxide und CO₂, minimiert wird.

9. Verfahren zum Steuern eines elektrischen Verteilnetzes nach einem der vorstehenden Ansprüche, **dadurch gekennzeichnet, dass**
- jedes Regelgebiet genau eine Regelgebietssteuerung aufweist.

10. Verfahren zum Steuern eines elektrischen Verteilnetzes nach einem der vorstehenden Ansprüche, **dadurch gekennzeichnet, dass**
- die Regelgebietssteuerung mit weiteren Regelgebietssteuerungen weiterer Regelgebiete kommuniziert, insbesondere Daten zum Steuern der Regelgebiete austauscht.

11. Verfahren zum Steuern eines elektrischen Verteilnetzes nach einem der vorstehenden Ansprüche, **dadurch gekennzeichnet, dass**
- das elektrische Verteilnetz N Netzleitstellen und R Regelgebiete mit jeweils S Regelgebietssteuerungen aufweist, wobei R ≥ S ≥ N ist, bevorzugt mit R ≥ 5 N und R = S und N =1.

12. Verfahren zum Steuern eines elektrischen Verteilnetzes nach einem der vorstehenden Ansprüche, **dadurch gekennzeichnet, dass**
- das den Windpark umfassende Regelgebiet bzw. alle Regelgebiete so gesteuert werden, dass die von den Erzeugern bereitgestellte Blindleistung verlustleistungsminimal optimiert ist.

## Claims

1. A method for controlling an electrical distribution network (400), which is connected by means of interconnection lines to other electrical distribution networks, wherein
- a network control station (458) is provided to control the electrical distribution network (400) and the electrical distribution network comprises a plurality of balancing areas (482, 486), wherein
- each balancing is an interconnection of a plurality of generators and/or consumers which are combined in the operational management in relation to third parties to form a balance node, wherein each balancing area outputs or receives an exchange power (PAI) to or from the electrical distribution network (400), and wherein
- at least one of the balancing areas (482) has at least one wind farm (410) for generating a generator power (PGW) and additionally at least one consumer (420) to receive a consumer power (PZ1), wherein at least one balancing area controller (484) is provided to control the at least one generator or wind farm (410), and the method comprises the following steps:
- reception by the balancing area controller (484) from the network control station (458) of a value of an exchange power to be set (PAS), wherein the exchange power (PAS) is defined as a sum between the consumer power (PZ1) and the generator power (PGW),
- drawing up by the balancing area controller (484) of a deployment plan for adherence to or attainment of the exchange power to be set (PAS), wherein the deployment plan is provided to control the generators (410) and consumers (420) and is drawn up in such a way that a difference between the attained exchange power (PAI) and the exchange power to be set (PAS) is minimal,
- transmission of reference values (PPS) by the balancing area controller (484) to the at least one generator or wind farm (410) and preferably to the at least one additional consumer (420), wherein the reference values are selected depending on the deployment plan in such a way that the difference between the exchange power (PAI) and the exchange power to be set (PPS) is minimal, that the exchange powers to be attained for the balancing areas are minimized in terms of amount
and
- generation of electrical power (PGW) by means of the at least one generator or wind farm (410) depending on the deployment plan, wherein a power excess prevails within the balancing area which can be made available to other balancing areas.

2. The method for controlling an electrical distribution network as claimed in claim 1, furthermore comprising the following steps:
- definition by the balancing area controller of at least one forecast value (PPI) for the exchange power providable and/or generator power generatable by the balancing area (482) for a predefined forecast time period (t15),
and
- transmission of the at least one forecast value from the balancing area controller to the network control station, wherein the forecast value preferably comprises or is an instantaneous value (PAI) which reflects the instantaneously achieved exchange power of the balancing area.

3. The method for controlling an electrical distribution network as claimed in claim 2, **characterized in that** the predefined forecast time period is one day or has an upper limit of 24 hours.

4. The method for controlling an electrical distribution network as claimed in one of the preceding claims, **characterized in that**
- the exchange power to be set is determined depending on a or the forecast value and/or on an or the instantaneous value.

5. The method for controlling an electrical distribution network as claimed in one of the preceding claims, **characterized in that**
- the forecast value is based on parameters of the wind farm and/or on parameters of at least one further generator, in particular in each case on the rated power of the generator or the wind farm or the at least one further generator, and/or on a weather forecast for the balancing area.

6. The method for controlling an electrical distribution network as claimed in one of the preceding claims, **characterized in that**
- the exchange power of the balancing area is **characterized by** a reactive power value and an active power value.

7. The method for controlling an electrical distribution network as claimed in one of the preceding claims, **characterized in that**
- the deployment plan comprises a predefined time interval which has optimized reactive and/or active power reference values, wherein the predefined time interval is particularly preferably 15 minutes or preferably 5 minutes or preferably 1 minute.

8. The method for controlling an electrical distribution network as claimed in one of the preceding claims, **characterized in that** a plurality of balancing areas are provided and the deployment plan is defined in such a way that
- the exchange powers to be attained for the balancing areas are minimized using an optimization method, in particular, the exchange powers to be attained for the balancing areas are minimized using a least squares method, and/or
- the exchange powers to be attained for the balancing areas are optimized via a cost function, and/or
- a potential emission of pollutants by conventional generators of the electrical supply network, in particular of the balancing areas, such as, for example, nitrogen oxides or CO₂, is minimized.

9. The method for controlling an electrical distribution network as claimed in one of the preceding claims, **characterized in that**
- each balancing area has precisely one balancing area controller.

10. The method for controlling an electrical distribution network as claimed in one of the preceding claims, **characterized in that**
- the balancing area controller communicates with further balancing area controllers of further balancing areas, in particular exchanges data for controlling the balancing areas.

11. The method for controlling an electrical distribution network as claimed in one of the preceding claims, **characterized in that**
- the electrical distribution network has N network control stations and R balancing areas, in each case with S balancing area controllers, where R ≥ S ≥ N, preferably where R ≥ 5 N and R = S and N =1.

12. The method for controlling an electrical distribution network as claimed in one of the preceding claims, **characterized in that**
- the balancing area comprising the wind farm, or all balancing areas are controlled in such a way that the reactive power provided by the generators is optimized for minimal power dissipation.

## Revendications

1. Procédé de commande d'un réseau de distribution électrique (400) qui est relié par le biais de conduites de couplage à d'autres réseaux de distribution électriques, dans lequel
- un centre de contrôle de réseau (458) pour la commande du réseau de distribution électrique (400) est prévu et le réseau de distribution électrique comprend plusieurs zones de régulation (482, 486), dans lequel
- chaque zone de régulation est une concentration de plusieurs générateurs et/ou consommateurs qui sont réunis dans la conduite de l'exploitation par rapport à des tiers en un noeud de bilan, dans lequel chaque zone de régulation fournit une énergie électrique d'échange (PAI) au réseau de distribution électrique (400) ou la reçoit de celui-ci, et dans lequel
- au moins une des zones de régulation (482) présente au moins un parc éolien (410) pour la génération d'une énergie électrique de générateur (PGW) et en outre au moins un consommateur (420) pour la réception d'une énergie électrique de consommateur (PZ1), dans lequel au moins une commande de zone de régulation (484) est prévue pour la commande de l'un au moins parc éolien (410), et le procédé comprend les étapes suivantes :
• la réception d'une valeur d'une énergie électrique d'échange (PAS) à régler du centre de contrôle de réseau (458) par la commande de zone de régulation (484), dans lequel l'énergie électrique d'échange (PAS) est définie comme une somme de l'énergie électrique de consommateur (PZ1) et de l'énergie électrique de générateur (PGW),
• l'établissement d'un plan d'action pour respecter ou atteindre l'énergie électrique d'échange (PAS) à régler par la commande de zone de régulation (484), dans lequel le plan d'action est prévu pour la commande des générateurs (410) et des consommateurs (420) et est établi de sorte qu'une différence de l'énergie électrique d'échange (PAI) atteinte par rapport à l'énergie électrique d'échange (PAS) à régler soit minimale,
• la transmission de valeurs de consigne) (PPS) par la commande de zone de régulation (484) à l'un au moins parc éolien (410) et de préférence à l'un au moins consommateur (420) en outre, dans lequel les valeurs de consigne sont choisies en fonction du plan d'action de sorte que la différence de l'énergie électrique d'échange (PAI) par rapport à l'énergie électrique d'échange à régler (PPS) soit minimale, dans lequel le plan d'action pour plusieurs zones de régulation est prévu et est déterminé de sorte que les énergies électriques d'échange à atteindre des zones de régulation soient minimisées en valeur, et
• la génération d'énergie électrique (PGW) au moyen de l'un au moins parc éolien (410) en fonction du plan d'action, moyennant quoi un excédent d'énergie électrique règne dans la zone de régulation, lequel est mis à disposition d'autres zones de régulation comme énergie électrique d'échange par le biais de conduites de couplage.

2. Procédé de commande d'un réseau de distribution électrique selon la revendication 1, comprenant en outre les étapes suivantes :
- la détermination d'au moins une valeur de pronostic (PPI) pour l'énergie électrique d'échange pouvant être fournie par la zone de régulation (482) pour une période de pronostic (t15) prédéterminée et/ou l'énergie électrique de générateur pouvant être générée par la commande de zone de régulation,
et
- la transmission de l'au moins une valeur de pronostic de la commande de zone de régulation au centre de contrôle de réseau, dans lequel la valeur de pronostic comprend ou est de préférence une valeur instantanée (PAI) qui reproduit l'énergie électrique d'échange momentanément atteinte de la zone de régulation.

3. Procédé de commande d'un réseau de distribution électrique selon la revendication 2, **caractérisé en ce que** la période de pronostic prédéterminée est un jour ou une limite supérieure de 24 heures.

4. Procédé de commande d'un réseau de distribution électrique selon l'une quelconque des revendications précédentes, **caractérisé en ce que**
- l'énergie électrique d'échange à régler est déterminée en fonction d'une ou de la valeur de pronostic et/ou d'une ou de la valeur instantanée.

5. Procédé de commande d'un réseau de distribution électrique selon l'une quelconque des revendications précédentes, **caractérisé en ce que**
- la valeur de pronostic se base sur des grandeurs caractéristiques du parc éolien et/ou se base sur des grandeurs caractéristiques au moins d'un autre générateur, en particulier respectivement sur l'énergie électrique nominale du générateur ou du parc éolien ou de l'au moins un autre générateur, et/ou sur une prévision météorologique pour la zone de régulation.

6. Procédé de commande d'un réseau de distribution électrique selon l'une quelconque des revendications précédentes, **caractérisé en ce que**
- l'énergie électrique d'échange de la zone de régulation est **caractérisée par** une valeur d'énergie électrique réactive et une valeur d'énergie électrique active.

7. Procédé de commande d'un réseau de distribution électrique selon l'une quelconque des revendications précédentes, **caractérisé en ce que**
- le plan d'action comprend un intervalle de temps prédéterminé qui présente des valeurs de consigne d'énergie électrique réactive et/ou active optimisées, dans lequel l'intervalle de temps prédéterminé s'élève de manière particulièrement préférée à 15 minutes ou de préférence à 5 minutes ou de préférence à 1 minute.

8. Procédé de commande d'un réseau de distribution électrique selon l'une quelconque des revendications précédentes, **caractérisé en ce que** plusieurs zones de régulation sont prévues et le plan d'action est déterminé de sorte que
- les énergies électriques d'échange à atteindre des zones de régulation soient minimisées par le biais d'un procédé d'optimisation, en particulier que les énergies électriques d'échange à atteindre des zones de régulation soient minimisées par le biais d'une méthode des moindres carrés et/ou
- les énergies électriques d'échange à atteindre des zones de régulation soient optimisées par le biais d'une fonction de coût et/ou
- une émission potentielle de substances nocives soit minimisée par des générateurs traditionnels du réseau d'alimentation électrique, en particulier des zones de régulation, comme des oxydes d'azote et du CO₂.

9. Procédé de commande d'un réseau de distribution électrique selon l'une quelconque des revendications précédentes, **caractérisé en ce que**
- chaque zone de régulation présente précisément une commande de zone de régulation.

10. Procédé de commande d'un réseau de distribution électrique selon l'une quelconque des revendications précédentes, **caractérisé en ce que**
- la commande de zone de régulation communique avec d'autres commandes de zone de régulation d'autres zones de régulation, en particulier échange des données de commande des zones de régulation.

11. Procédé de commande d'un réseau de distribution électrique selon l'une quelconque des revendications précédentes, **caractérisé en ce que**
- le réseau de distribution électrique présente N centres de contrôle de réseau et R zones de régulation avec respectivement S commandes de zone de régulation, dans lequel R ≥ S≥ N, de préférence avec R ≥ 5 N et R = S et N = 1.

12. Procédé de commande d'un réseau de distribution électrique selon l'une quelconque des revendications précédentes, **caractérisé en ce que**
- la zone de régulation comprenant le parc éolien ou toutes les zones de régulation sont commandées de sorte que l'énergie électrique réactive fournie par les générateurs soit optimisée de manière à minimiser l'énergie électrique dissipée.
